(19) Europäisches Patentamt
European Patent Office
Office européen des brevets

(11) **EP 1 889 955 B1**

(12) **EUROPEAN PATENT SPECIFICATION**

(45) Date of publication and mention
of the grant of the patent:
**13.08.2008 Bulletin 2008/33**

(51) Int Cl.:
*D01F 8/16* (2006.01)     *D01F 8/06* (2006.01)
*B32B 27/02* (2006.01)     *D04H 3/00* (2006.01)

(21) Application number: **06016946.3**

(22) Date of filing: **14.08.2006**

(54) **Elastic spunbonded nonwoven and composite nonwoven comprising the same**

Elastischer Spinnvliesstoff sowie damit ausgestatteter Verbundvliesstoff

Nontissé filé-lié élastique et matériau composite le comprenant

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(43) Date of publication of application:
**20.02.2008 Bulletin 2008/08**

(73) Proprietor: **ALBIS Spa**
**20123 Milano (IT)**

(72) Inventors:
• **Boscolo, Galliano**
  **Vigliano, B.SE (IT)**
• **Maltese, Antonino**
  **Gorle (BG) (IT)**

(74) Representative: **Matkowska, Franck**
**Matkowska & Associés**
**9 Rue Jacques Prévert**
**59650 Villeneuve d'Ascq (FR)**

(56) References cited:
**EP-A- 1 591 574          WO-A-03/008680**
**WO-A1-00/08243          WO-A2-20/04038085**

**EP 1 889 955 B1**

**Description**

FIELD OF THE INVENTION

The present invention relates to a novel elastic spunbonded nonwoven made from multi-component filaments, and having a remarkable elastic recovery, and to a composite nonwoven comprising at least two superposed layers, one of which being constituted by the said novel elastic spunbonded nonwoven.

PRIOR ART

Elastic nonwoven fabrics advantageously offer the ability to conform to irregular shapes, and thus enable to increase fit and to allow more freedom and comfort, for example to body movements, than other textile fabrics with more limited extensibility. Elastic nonwoven fabrics are thus widely used in many industrial applications. Elastic nonwoven fabrics are used in the hygienic and personal care industry for making, for example, disposable diapers, child swim pants, child training pants, adult incontinent garments, sanitary napkins, wipes and other personal care products. Elastic nonwoven fabrics are also used in the manufacture of medical products, such as, for example, gowns, linens, bandages, masks, heads wraps and drapes. Others additional applications of elastic nonwoven fabrics include consumer products, like seat covers and car covers.

The demand for innovative and low cost elastic nonwoven products has increased in the last years. Several techniques can be used to produce nonwoven fabrics, but recently, due to the increasing of a higher cost efficiency requested by the market, methods based on melt spinning of thermoplastic materials have increased their importance. Such nonwoven fabrics, called "spunbonded" nonwovens can advantageously give the required combinations of physical properties, like softness, strength and durability.

One solution used in the prior art for making elastic spunbonded nonwoven webs consists in melt spinning filaments made of elastomeric polymer, such as, for example, thermoplastic polyurethane (TPU).

Significant problems have been however encountered with this solution.

One of these problems is linked to the "sticky" nature of the elastomeric polymer, typically employed in producing elastic nonwoven materials. In fact during the spunbonding process, the large air flow used for drawing the filament can make the filaments stick together and therefore the resulting web uniformity will be negatively affected. Furthermore this bigger filament bundling can give trouble due to the blocking effect when the fabric is wound into rolls.

Another problem encountered when elastomeric polymers are used for making spunbonded nonwovens is the breakage of the filaments during extrusion and/or drawing for attenuating the filaments. When filaments break they can obstruct the flow of filaments and/or mesh with other filaments, resulting in the formation of a defect in the nonwoven web.

A further drawback of the use of elastomeric polymers such as TPU for making spunbonded nonwoven is their poor bonding ability, especially thermal-bonding ability, with the most used polyolefin materials.

In order to overcome these problems, it has been proposed in US patent No 6, 225, 243 and in PCT application WO 00/08243 to produce spunbonded nonwoven webs made of multi-component filaments including at least two components: a first elastic polymeric component, and a second, extensible polymeric component, the first elastic polymeric component having an elasticity that is greater than the elasticity of the second polymeric component. The first elastic polymeric component preferably comprises at least one elastomer that includes an elastic polypropylene ; the second polymeric component preferably comprises at least one polyolefin that is a linear low density polyethylene (LLDPE) having a density greater than 0.90 g/cc.

This solution disclosed in US patent No 6,225,243 in PCT application WO 00/08243 is however not satisfying in terms of elastic properties, especially in terms of elastic recovery.

OBJECTIVE OF THE INVETION

The present invention proposes a novel elastic spunbonded nonwoven web that overcomes the aforesaid problems inherent to the use of elastomeric polymers such as TPU, and that enables to achieve higher elastic properties, especially higher elastic recovery properties, than the solution described in US patent No 6,225,243 and PCT application WO 00/08243.

SUMMARY OF THE INVENTION

The above-mentioned objective is achieved by the elastic spunbonded nonwoven web of claim 1.

The spunbonded nonwoven web of the invention comprises a plurality of multi-component filaments, each filament comprising at least a first polymeric component and a second polymeric component. The first polymeric component comprises thermoplastic polyurethane, and the second polymeric component comprises an elastic propylene-based olefin copolymer.

The wording "thermoplastic polyurethane", as used therein, means any melt spinnable thermoplastic polyurethane.

In particular, thermoplastic polyurethane suitable for the invention is any melt spinnable polymer obtained by reaction of a high molecular weight diol, an organic diisocyanate and a chain extender.

More particularly, the thermoplastic polyurethane suitable for the invention has the following characteristics.

The molecular weight of the thermoplastic polyurethane elastomer is preferably at least 100,000g/mol. The high molecular weight diol is a bifunctional molecule with hydroxyl end groups and an average molecular weight of 500-5,000 g/mol.

The high molecular weight diol can be either polyether-type polyols, e.g., polytetramethylene glycol, polypropylene glycol, etc., and polyester-type polyols, e.g., polyhexamethylene adipate, polybutylene adipate, polycarbonate diol, polycaprolactone diol, etc. or mixtures thereof.

The chain extenders used to build the molecular weight to a certain desired value could belong to the following list: 1,4-butanediol, ethylene glycol, propylene glycol, bis(2-hydroxyethoxy)benzene ; The chain extenders have a molecular weight of 500 or less. Among the aforesaid chain extenders, 1,4 butanediol and bishydroxyethoxybenzene are the most commonly employed. Chain extenders with one or more amine terminations, for example ethanol amine or ethylene diamine, may be also considered, but normally they are used at relatively low percentages (<10% by weight of the chain extender mixture) and as mixtures with diol chain extenders.

The organic diisocyanates include toluene diisocyanate (TDI), 4,4'-diphenylmethane diisocyanate (MDI), or non-yellowing diisocyanate 1,6-hexanediisocyanate: MDI is the diisocyanate most commonly employed for the polyurethane synthesis due to its suitable reactivity with polyols. Further substances can be added to the polymer just after the polyurethane synthesis. These substances, known as general additives, are for example stabilizers, modifiers agents, such as titanium dioxide, dyes, pigments, UV stabilizer, UV absorbent, bactericide, etc..

In addition to the main reactants like high molecular weight diols, organic isocyanates, and chain extenders, small percentages of comparable components having higher functionality to impart some cross-linking, i.e. substances with more than 2 hydroxyl or isocyanate groups, may be blended into the polyurethane polymer. Usually it is necessary to maintain the cross-linking level below 5 % in weight.

Suitable polyurethanes for inclusion in the core component should have fibre formability or spinnability, thermoplastic behaviour and low hardness. Regarding the hardness of the thermoplastic polyurethane used in the invention, it is recommended to be in the range of 65 to 95 Shore A and more preferably in the range of 75 to 85 Shore A.

Preferred candidates for the invention are, for example, those commercially available from Elastogran GmbH - Basf Group, Lemfoerde, Germany under the trademark of Elastollan®, particularly those suitable for spunbonding processes, i.e. 1180A, 1185 A M and 2180 A.

The wording "elastic propylene-based olefin copolymer", as used therein, means polypropylene polymers, selected from the group of thermoplastic olefin-based elastomers, that incorporate a low level of a comonomer, such as ethylene or a higher alpha-olefin in the backbone to form an elastomeric copolymer. The term copolymers means any polymer comprising two or more monomers, where the monomer present in the polymer is the polymerized form of the monomer. Likewise when catalyst components are described as comprising neutral stable forms of the components, it is well understood that the active form of the component is the form that reacts with the monomers to produce polymers.

As used herein, the term "polypropylene", "propylene polymer," or "PP" refers to homopolymers, copolymers, terpolymers, and interpolymers, comprising from 50 to 100 weight % of propylene.

More particularly, "elastic propylene-based olefin copolymer" an be a single semi-amorphous copolymer or a blend of several semi-amorphous polymers, each semi-amorphous polymer comprising propylene and from 10 to 25 weight % of one or more C2 and/or C4 to C10 alpha-olefin co-monomers, preferably ethylene, wherein the copolymer comprises isotactically crystallizable alpha-olefin sequences. The term "crystallizable" describes those polymers or sequences which are mainly amorphous in the undeformed state, but upon stretching or annealing, crystallization occurs.

Most preferably, the copolymer is an ethylene propylene copolymer, e. g., ethylene propylene thermoplastic elastomer. The copolymer has a substantially uniform composition distribution preferably as a result of polymerization with a metallocene catalyst. Composition distribution is a property of copolymers indicating a statistically significant intermolecular or intramolecular difference in the composition of the polymer.

Preferably, each semi-amorphous polymers has : a) heat of fusion of 4 to 70 J/g, as determined by Differential Scanning Calorimetry (DSC); b) a Melt Flow Rate of 0.1 to 2000 dg/min, most preferably greater than 5 dg/min and less than 100 dg/min, as measured by ASTM D-1238 at 230°C, and 2.16 kg.

A semi-amorphous copolymer may be produced in a continuous solution process using a metallocene catalyst.

Preferably, copolymers having a narrow molecular weight distribution are used. To produce a copolymer having a narrow molecular weight distribution, a single sited metallocene catalyst is advantageously used, which allows only a single statistical mode of addition of the first and second monomer sequences, and the copolymer is advantageously well-mixed in a continuous flow stirred tank polymerization reactor, which allows only a single polymerization environment for substantially all of the polymer chains of the copolymer.

Preferred semi-amorphous polymers useful in this invention preferably have a molecular weight distribution (Mw/Mn) of less than 5, preferably between 1.5 and 4, preferably between 1.5 and 3.

As used herein, molecular weight (Mn and Mw) and molecular weight distribution (MWD or Mw/Mn) are determined by gel permeation chromatography using polystyrene standards.

As used herein, "metallocene" means one or more compounds represented by the formula Cp1nMRnXq, wherein Cp is a cyclopentadienyl ring which may be substituted, or derivative thereof (such as indene or fluorene) which may be substituted; M is a transition metal, for example titanium, zirconium, hafnium, vanadium, niobium, tantalum, chromium, molybdenum and tungsten; R is a substituted or unsubstituted hydrocarbyl group or hydrocarboxy group having from one to 20 carbon atoms; X may be a halide, a hydride, an alkyl group, an alkenyl group or an arylalkyl group; and typically, m=l-3; n=0-3; q=0-3.

A slip agent selected from the group consisting of: erucamide, oleylamide, oleamide, and stearamide and used in a concentration from 50 ppm to 10 weight % can be successful added.

Preferred elastic propylene-based olefin copolymers suitable for the invention include thermoplastic elastic propylene-ethylene copolymers formed by using metallocene polymerization catalysis. Such polymers include those commercially available from ExxonMobil Chemical Co, Huston, TX under the trademark of VISTAMAXX®, particularly those suitable for spunbonding processes, e.g. Vistamaxx 2120 and Vistamaxx 2125.

Preferably, the elastic propylene-based olefin copolymer is further characterized by the following features that can be combined or taken alone :

- each multi-component filament comprises a core and an outer sheath, and wherein the core comprises the first polymeric component, and the sheath comprises the second polymeric component ;
- the elastic propylene-based olefin copolymer is ethylene propylene copolymer ;
- the elastic propylene-based olefin copolymer comprises propylene and from 10 to 25 weight % of one or more C2 and/or C4 to C10 alpha-olefin co-monomers ;
- the elastic propylene-based olefin copolymer has (a) a heat of fusion of 4 to 70 J/g, determined by Differential Scanning Calorimetry (DSC) and (b) a Melt Flow Rate of 0.1 to 2000 dg/min, most preferably greater than 5 dg/min and less than 100 dg/min, as measured by ASTM D-1238 at 230°C and 2.16 kg;
- the elastic propylene-based olefin copolymer has a molecular weight distribution (Mw/Mn) of less than 5, preferably between 1.5 and 4, even more preferably between 1.5 and 3 ;
- the elastic propylene-based olefin copolymer comprises at least 80wt% of propylene units;
- the elastic propylene-based olefin copolymer is a metallocene-catalysed polymer;
- the spunbonded nonwoven has a root mean square (RMS) average recovery of at least 85%, more preferably of at least 90%, and even more preferably of at least 95%, said RMS average recovery being calculated from the formula:

$$\text{RMS average recovery} = [1/2(R_{CD}^2 + R_{MD}^2)]^{\frac{1}{2}},$$

wherein $R_{MD}$ and $R_{CD}$ are recovery values (R) measured on a nonwoven specimen respectively in machine direction and cross direction, after 50% elongation and one pull, and calculated from the formula :

$$R = [(Ls-Lr) / (Ls-Lo)]\%,$$

wherein Ls represents the stretched length of the specimen; Lr represents the recovered length of the specimen, Lo represents the original length of the specimen ;
- the spunbonded nonwoven has a RMS recovery, after two successive 50% pulls, of at least 80%, and more preferably of at least 90%.

In a preferred variant, the amount of the first polymeric component is at least 50wt% of the total weight of the filament, and the amount of the second polymeric component is less than 50wt% of the total weight of the filament; more preferably, the amount of the second polymeric component is less than 40wt% of the total weight of the filament, and preferably equal or less than 30wt% of the total weight the filament.

Another object of the invention is to propose a composite nonwoven comprising at least one nonwoven layer and a spunbonded web (W) as defined above.

More particularly, and optionally, the composite nonwoven is characterized by the following features, hat can be taken alone or combined together:

- at least one nonwoven layer is a carded nonwoven layer.
- at least one nonwoven layer is a meltblown layer.
- at least one nonwoven layer is constituted by a polyolefin-based nonwoven layer ;
- the composite nonwoven comprises at least two carded polyolefin-based nonwoven layers and a spunbonded web as defined above and sandwiched between the two carded polyolefin-based nonwoven layers ;
- the composite nonwoven comprises a meltblown layer (MB) interposed between the spunbonded web (W) and one carded polyolefin-based nonwoven layer (L2);
- the spunbonded web and each polyolefin-based nonwoven layer are thermally bonded together with a degree of bonding (i.e. the ratio between the whole area of the bonding points of the calander roll and the whole area of the calander roll) that is less than 20%, preferably less than 15%, and more preferably less than 10%;
- the spunbonded web and each polyolefin-based nonwoven layer are thermally bonded together at a bonding temperature between 90°C and 130°C, and preferably between 100°C and 120°C
- the composite nonwoven has a CD load@Peak of at least 3.15 N/cm (8 N/inch), and more preferably of at least 3.9 N/cm (10 N/inch);
- the composite nonwoven has a CD elongation@Peak of at least 280 %, and preferably of at least 320% ;
- the composite nonwoven has a CD load@150%Elongation of at least 1.6 N/cm (4 N/inch), and more preferably of at least 2 N/cm (5 N/inch).

The wording "polyolefin-based nonwoven layer", as used therein, means any nonwoven layer that is essentially made from a polymer or copolymer that is exclusively or predominantly made up of polyolefin units.
Preferably, at least one polyolefin-based nonwoven layer is a polypropylene-based nonwoven layer.
The wording "polypropylene-based nonwoven layer", as used therein, means any nonwoven layer that is essentially made from a polymer or copolymer that is exclusively or predominantly made up of polypropylene units.

BRIEF DESCRIPTION OF DRAWINGS

Other characteristics and advantages of the invention will appear more clearly on reading the following detailed description which is made by way of non-exhaustive and non-limiting examples, and with reference to the accompanying drawings on which:

- Figure 1 is a schematic drawing of an example of production line used for making a spunbonded nonwoven web of the invention ;
- Figure 2 is a schematic drawing of an example of production line used for making a composite nonwoven of the invention

DETAILED DESCRIPTION OF THE INVENTION

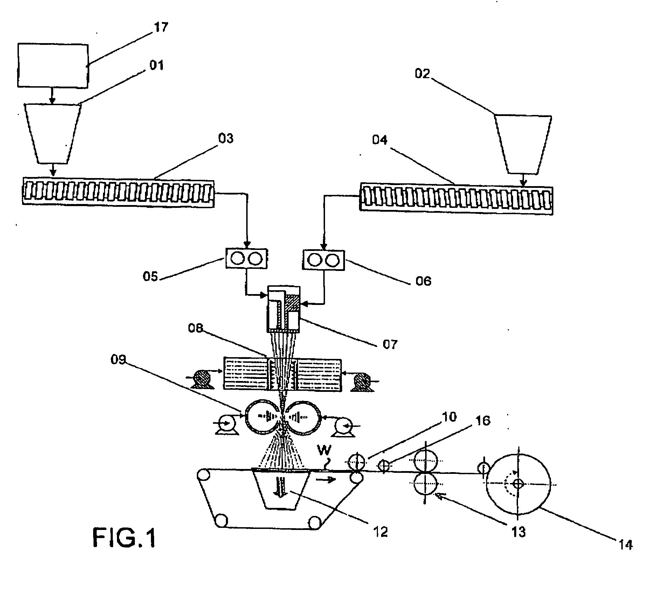

The elastic nonwoven web of the invention is obtained by a spunbonding process and is made of multi-component filaments comprising at least two different polymeric components that are specific of the invention.
Preferably, the multi-component filaments are bi-component filaments, and /or comprise a core comprising or made of the first polymeric component and an outer sheath comprising or made of the second polymeric component. Preferably, filaments of the sheath/core type are used for a better thermal-bondability of the spunbonded elastic web with other polyolefin layers, as described hereafter. In case of bi-component filaments of the sheath /core type, the outer sheath is in contact with the core. In other variant of filaments, with more than two polymeric components, one or several intermediate layers can be interposed between the outer sheath and the core.
In case of sheath/core bi-component filaments, various cross sections for the filaments can be envisaged. Examples of different cross sections for sheath/core bi-component filaments that are suitable for the invention are illustrated on figures 1B, 1C, 1D, 1E of US patent No 6,225,243.
Although the sheath/core configuration is preferred, the invention is however not limited to that particular configuration. Other types of known configurations that are suitable for the invention are shown for example in figures 1A and 1F of US patent No 6,225,243.
According to the invention, the first polymeric component comprises thermoplastic polyurethane (TPU) suitable for extrusion processes, and in particular a thermoplastic polyether-polyurethane or thermoplastic polyester-polyurethane or polyether-ester-polyurethane. The second polymeric component comprises an elastic propylene-based olefin copolymer.
The elastic propylene-based olefin copolymer is preferably a propylene-ethylene copolymer, like the ones commercially available from ExxonMobil Chemical Co, Huston, TX under the trademark of VISTAMAXX®.

The first and second polymeric components described above can also include others materials, like pigments or colorants, antioxidants, stabilizers, fillers, surfactants, waxes, flow promoters or special additives to enhance processability of the composition, like for example slip agents. It is particularly recommended to add slip agents in the second polymeric component.

The method applied to produce the elastic nonwoven web according to the present invention is the spunbonding process. Various types of spunbonding processes are described in US patent 3,338,992 to Kenney, US patent 3,692,613 to Dorschner, US patent 3,802,817 to Matsuki, US patent 4,405,297 to Appel, US patent 4,812,112 to Balk and US patent 5,665,300 to Brignola et al.

The process of spunbonding in general includes:

- the melting and the extrusion of the filaments from a bi-component spinnerets plate, where the capillary holes are located in one or more rows;
- the quenching of the filaments by an air flow which is previously cooled, to obtain the filaments solidification;
- the attenuation of the filaments during the advancement through the quenching zone by means of a air drawing;
- the collection of the drawn filaments into a web on a foraminous surface, like which one of a wire belt;
- transforming the filaments into a web by bonding, like thermal-bonding process.

Several bonding processes can be applied, but the preferred one is the thermal point-bonding, most preferred when calander rolls are used, with a bonding area of less than 20%, preferably less than 15%, and more preferably less than 10%. This low degree of bonding allows the filaments to extend when the web is stretched to the limits described in the following tables and the fabric integrity is maintained.

One example of a suitable process line for producing an elastic nonwoven web of the invention is illustrated in Figure 1. In this example, the elastic nonwoven web is obtained by spunbonding bi-components filaments, preferably of the sheath/core type.

The process line includes two hoppers 1 and 2, containing respectively the first (TPU) and second (elastic propylene-based olefin copolymer) polymeric components. These two hoppers 1 and 2 feed in parallel two extruders 3 and 4, for separately melting the two polymeric components. The outputs of the two extruders 3 and 4 are connected to two melt polymer pumps 5, 6 respectively. Said pumps 5, 6 feed a dosed amount of polymers to the bi-component spinning pack 7.

In the example of figure 1, a drying equipment 17 is preferably used in order to dry the TPU chips polymer (1st polymeric component) by means of hot air or preferably hot nitrogen to remove water humidity at a level below 200 ppm, in order to avoid the degradation of the polyurethane material during the melting within the extruder. The above mentioned dryer is usually installed on top of the relevant hopper 1.

The bi-component spinning pack 7 usually contains a certain number of plates stacked one on top of the other to distribute the polymers to the lower plate which is the spinnerets plate, having one or more rows of capillary holes and where the bi-component filaments are extruded. Typical spinnerets die systems well known designed for polypropylene can be used, with a die hole density of 3000-6000 holes per meter, even if a lower hole density is preferred, and a die capillary hole diameter of 0.3 to 0.8 mm is the preferred one. The barrel temperatures of the two extruders are, for example, ranging from a minimum of 170°C to a maximum 260°C, being slightly lower for the first extruder processing the TPU material (1st polymeric component), notably below 225°C, depending on screws speed and design.

The whole system related to the TPU process side should be designed appropriately not to exceed a total residential time for the molten polymer of 15-20 minutes.

When the two polymers are extruded through the spinnerets holes a curtain of filaments is formed downward and it encounters the quench air which flow is rectified inside the quench boxes 8, by means of a suitable system, like honey-comb structure, well known to those of ordinary skill in the art.

During the filaments solidification this system avoids air turbulences which can bring to stick together the filaments in formation. It is recommended to apply the quench air from both sides of the filaments curtain in order to improve the cooling efficiency, as elastic polymers usually show a tendency to stickiness, as well as to keep down the air flow temperature to the minimum reachable. Temperatures below 20°C are considered suitable for the scope, but lower temperatures, in the range of 10°C to 15°C, are recommended when more elastic and soft materials are applied in the sheath arrangement. To this purpose two quench boxes 8 are shown in the Figure 1. Each quench box 8 is connected to a blower which delivers the right low pressure air flow necessary for the filaments cooling.

After having been cooled the filament curtain enters in a draw unit 9, which in the most preferred case is constituted by a slot through which the filaments are drawn by means of air flow entering from the sides of the slot and flowing downward through the passage. The air for the filaments drawing and the secondary ambient air flow through the fiber draw unit to the vacuum box 12 positioned below the web forming surface S. The above mentioned web forming surface S is usually constituted by a foraminous surface, remarkably a wire belt permeable to the air, able to keep the filaments as they have been deposited on its surface, by applying the vacuum.

The process line further comprises a compression roller 10 which stabilizes, by means of a low compression, the web just after it is formed on the forming surface S and a pair of thermal point calander rolls 13, that are used to bond the filaments together. The bonding area was around 18%. The bonding temperature was set between 90°C and 130°C, preferably between 100°C and 120°C.

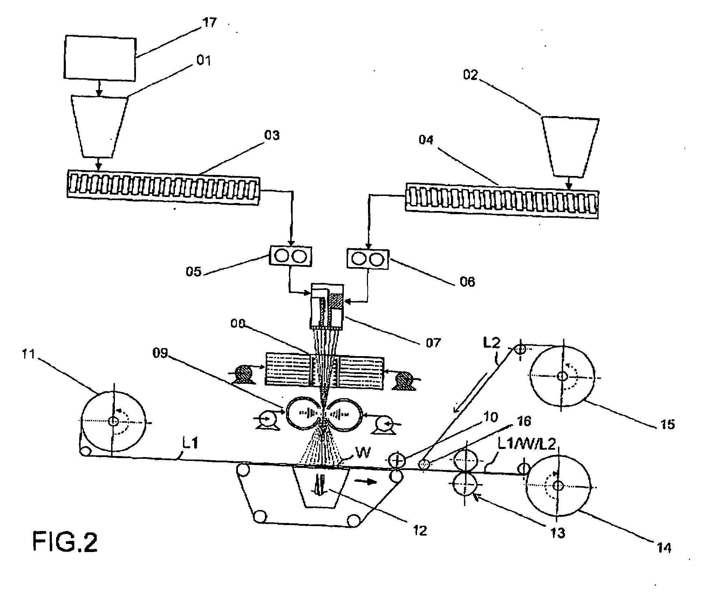

In the variant of figure 2, the process line of figure 1 has been modified in order to further comprise two delivering means 11 and 15, for example in the forms of rolls, for delivering two additional nonwoven layer L1, L2. The delivering means 11 are positioned upstream the area where the spunbonded web W is being formed, and is used for laying directly onto the transport surface S a lower pre-consolidated nonwoven layer L1 (for example a spun layer, a meltblown layer or a carder layer). In this configuration, the spunbonded web W of the invention is formed on top of this lower layer L1. The delivering means 15 are positioned downstream the area where the spunbonded web W is being formed, and is used for laying directly onto the spunbonded web W a top pre-consolidated nonwoven layer L2 (for example a spun layer, a meltblown layer or a carder layer). The nonwoven web W is thus sandwiched between the two outer nonwoven layers L1 and L2.

In another variant, layer L1 and/or layer L2 could be produced in line with spunbonded web W; For example, when layer 1 and/or layer L2 are carded webs, the delivering means 11 and 15 can be replaced by a carding machine. In that case the layers L1 and L2 do not necessarily need to be pre-consolidated before being laid onto the transport surface S.

Referring to figure 2, the three layers (L1, W and L2) of the composite nonwoven are thermally bonded together by means of calander rolls 13, and the consolidated composite nonwoven (L1/W/L2) is wound up in the form of rolls on a winding machine 14. This winding machine 14 has to be suitable for elastic material, and preferably enables a strict control of tension variations during winding, said tension variations being ceased by the elastic properties inherent to the final composite nonwoven.

Examples-spunbonded Web (W)

Different spunbonded nonwoven webs (W) made from bi-component filaments having a sheath/core arrangement have been produced in a pilot plant scale, reproducing the process of the present invention, as described above in reference to Fig.1.

The elastic properties of the resulting nonwoven W of the invention were measured at 23°C $\pm$ 2, using an Instron Testing apparatus set at 12.7 cm (5 inch) gauge length and a stretching rate of 12.7 cm (5 inches) per minute. At the designated 50% elongation value, the sample is held in the stretched state for 30 seconds and then allowed to fully relax at zero force. The percent recovery can then be measured. At the end the recovery (R) was measured in both CD and MD directions, according to the formula : R = [(Ls-Lr) / (Ls-Lo)]%, wherein Ls represents the stretched length of the specimen; Lr represents the recovered length of the specimen, Lo represents the original length of the specimen.

Recovery 1st pull - 50%:
Web samples of a predetermined length Lo in the relaxed state were cut in each web W. The web samples were elongated at 50% elongation, held in the stretched state for 30 seconds and then relaxed to zero tensile force.
Recovery 2nd pull - 50%:
The web samples were elongated a second time at 50% elongation, held in the stretched state for 30 seconds and then relaxed to zero tensile force. At the end the recovery (R) was measured.

The resulting nonwoven of the invention has a root mean square (RMS) average recovery of at least 85%, said RMS average recovery being based on machine direction ($R_{MD}$) and cross direction ($R_{CD}$) recovery values after 50% elongation and one pull. RMS average recovery are calculated from the formula:

$$\text{RMS average recovery} = [1/2(R_{CD}^2 + R_{MD}^2)]^{1/2}$$

wherein $R_{CD}$ is the recovery measured in the cross direction and $R_{MD}$ is the recovery measured in the machine direction. Preferably, the fabrics have at least about a RMS recovery of 80% after two successive 50% pulls.

The characteristic of the different webs W and the recovery results issued from these experiments are summarized in Table 2 and in Table 3. Table 2 relates to spunbonded web W of the invention, and Table 3 relates to comparative spunbonded web W not covered by the invention.

In tables 2 and 3, the polymeric materials that have been used were the following:

TPU

Thermoplastic Polyurethane material commercialized under the trademark ELASTOLLAN® by Elastogran GmbH, Lemfoerde, Germany. Three different and commercially available grades have been tested, namely grades 1180A, 1185 AM and 2180A. Other technical characteristics of grades 1180A, 1185 AM and 2180A are given in table 1a.

VM 2120

VM 2120 is a specialty polyolefin elastomer commercially available from ExxonMobil Chemical Co, Huston, TX under the trademark of VISTAMAXX®. This specialty polyolefin elastomer is a semi-crystalline elastic propylene-based olefin copolymer comprising at least 80wt% of propylene units and made in the presence of a metallocene catalyst during the polymerization process. This copolymer has a MFR (Melt Flow Rate) of 80 (measured at 230°C and 2.16Kg - ASTM D-1238), a broad melting temperature range and a highest melting peak of 160°C. This copolymer has a slower crystallization rate than polypropylene homopolymers.

VM 2125

VM 2120 is a specialty polyolefin elastomer commercially available from ExxonMobil Chemical Co, Huston, TX under the trademark of VISTAMAXX®. This specialty polyolefin elastomer is a semi-crystalline elastic propylene-based olefin copolymer comprising at least 85wt% of propylene units and made in the presence of a metallocene catalyst during the polymerization process. This copolymer has a MFR (Melt Flow Rate) of 80 (measured at 230°C and 2.16Kg - ASTM D-1238), a broad melting temperature range and a highest melting peak of 160°C. This copolymer has a slower crystallization rate than polypropylene homopolymers.

Other technical characteristics of materials VM2120 and VM 2125 are given in table 1b.

**Table 1a : Elastollan grades**

| MAIN CHARACTERISTICS | Grade 1180A | Grade 1185 AM | Grade 2180 A | METHOD |
|---|---|---|---|---|
| CHEMICAL FAMILY | TPU Basis polyol: Polyether | TPU Basis polyol: Polyether | TPU Basis polyol: Polyester-ether | |
| DENSITY_g/cm$^3$ | 1,14 | 1,11 | 1,13 | ISO 1183-1-A |
| HARDNESS (SHORE A) (1) | 80 | 88 | 77 | ISO 868 |
| TENSILE STRENGTH_Mpa | 45 | 45 | 45 | ISO 37 |
| ELONGATION @ BREAK_% | 650 | 600 | 450 | ISO 37 |
| TENSILE STRESS @ 100% ELONG._Mpa | 4,5 | 7 | 4,5 | ISO 37 |
| TENSILE STRESS @ 300% ELONG. Mpa | 8 | 12 | 10 | ISO 37 |
| (1) Measurements were performed on compression molded specimens | | | | |

**TABLE 1b: VM2120 - VM 2125**

| MAIN CHARACTERISTICS | Grade VM 2120 | Grade VM 2125 | METHOD |
|---|---|---|---|
| CHEMICAL FAMILY | POLYOLEFIN | POLYOLEFIN | |
| MFR_g/10min (1) | 80 | 80 | ASTM D-1238 |
| DENSITY_g/cm$^3$ | 0.868 | 0,865 | internal |
| HARDNESS (SHORE A)_(1) | 64 | 63 | ASTM D-2240 |
| E-MODULUS_Mpa (2) | 25,4 | 18 | ASTM D-790 |
| TENSILE @ BREAK_Mpa | 7,4 | 6,6 | ASTM D-638 |
| ELONGATION @ PEAK_% | >2000 | >2000 | ASTM D-638 |

(continued)

| MAIN CHARACTERISTICS | Grade VM 2120 | Grade VM 2125 | METHOD |
|---|---|---|---|
| CHEMICAL FAMILY | POLYOLEFIN | POLYOLEFIN | |
| TENSILE STRESS @ 150% ELONG._Mpa | 2,4 | 1,9 | ASTM D-412 |
| TENSILE STRESS @ 300% ELONG. Mpa | 2,9 | 2,4 | ASTM D-412 |
| (1) Measurements were performed on compression molded specimens | | | |

**TABLE 2 : Elastic nonwoven webs based on different blends TPU-VM**

| Example N° | | Filament bi-component | Filament composition | Web(W) - weight gsm | Root Mean Square | |
|---|---|---|---|---|---|---|
| | | | | | Recovery 1st pull 50% | Recovery 2nd pull 50% |
| 1 | core | 70wt% | TPU 1185 AM | 41 | 90,3 | 89,0 |
| | sheath | 30wt% | VM 2120 | | | |
| 2 | core | 70wt% | TPU 1185 AM | 70 | 92.1 | 91,2 |
| | sheath | 30wt% | VM 2120 | | | |
| 3 | core | 70wt% | TPU 1185 AM | 98 | 94,0 | 92,3 |
| | sheath | 30wt% | VM 2120 | | | |
| 4 | core | 70wt% | TPU 1185 AM | 38 | 91 | 90,1 |
| | sheath | 30wt% | VM 2125 | | | |
| 5 | core | 70wt% | TPU 1185 AM | 71 | 95,1 | 93,4 |
| | sheath | 30wt% | VM 2125 | | | |
| 6 | core | 70wt% | TPU 1185 AM | 101 | 96,5 | 94,5 |
| | sheath | 30wt% | VM 2125 | | | |
| 7 | core | 70wt% | TPU 1180 A | 40 | 92,3 | 90,1 |
| | sheath | 30wt% | VM 2120 | | | |
| 8 | core | 70Wt% | TPU 1180 A | 69 | 93,5 | 92,2 |
| | sheath | 30wt% | VM 2120 | | | |
| 9 | core | 70wt% | TPU 1180 A | 99 | 94.3 | 93,4 |
| | sheath | 30wt% | VM 2120 | | | |
| 10 | core | 70wt% | TPU 1180 A | 41 | 93,3 | 91,3 |
| | sheath | 30wt% | VM 2125 | | | |
| 11 | core | 70wt% | TPU 1180 A | 70 | 94,3 | 93,3 |
| | sheath | 30wt% | VM 2125 | | | |
| 12 | core | 70wt% | TPU 1180 A | 100 | 96,1 | 94,1 |
| | sheath | 30wt% | VM 2125 | | | |
| 13 | core | 70wt% | TPU2180A | 42 | 90,3 | 89,2 |
| | sheath | 30wt% | VM 2120 | | | |
| 14 | core | 70wt% | TPU 2180 A | 70 | 93,1 | 91,3 |
| | sheath | 30wt% | VM 2120 | | | |

(continued)

|  | | Filament bi-component | Filament composition | Web(W) - weight gsm | Root Mean Square | |
|---|---|---|---|---|---|---|
| Example N° | | | | | Recovery 1st pull 50% | Recovery 2nd pull 50% |
| 15 | core | 70wt% | TPU 2180 A | 98 | 94,3 | 92,4 |
| | sheath | 30wt% | VM 2120 | | | |
| 16 | core | 70wt% | TPU 2180 A | 41 | 92,9 | 90,3 |
| | sheath | 30wt% | VM 2125 | | | |
| 17 | core | 70wt% | TPU2180A | 70 | 94,2 | 92,1 |
| | sheath | 30wt% | VM 2125 | | | |
| 18 | core | 70wt% | TPU 2180 A | 99 | 95,1 | 93,5 |
| | sheath | 30wt% | VM 2125 | | | |

### TABLE 3: Elastic nonwoven web - Comparative examples

|  | | Filament bi-component | Filament composition | Web (W) - weight gsm | Root Mean Square | |
|---|---|---|---|---|---|---|
| Example N° | | | | | Recovery 1st pull 50% | Recovery 2nd pull 50% |
| 19 | core | 70wt% | TPU1185AM | 49 | 97.1 | 98.1 |
| | sheath | 30wt% | TPU 1185 AM | | | |
| 20 | core | 70wt% | TPU 1180 A | 50 | 97,3 | 96,7 |
| | sheath | 30wt% | TPU 1180 A | | | |
| 21 | core | 70wt% | TPU 2180 A | 49 | 96,0 | 94,3 |
| | sheath | 30wt% | TPU 2180 A | | | |
| 22 | core | 70wt% | VM 2125 | 50 | 88,1 | 86,4 |
| | sheath | 30wt% | VM 2125 | | | |
| 23 | core | 70wt% | VM 2120 | 51 | 86.3 | 83.6 |
| | sheath | 30wt% | VM 2120 | | | |

The spunbonded web (W) of the invention (examples No 1 to 18) exhibits very high recovery values. These recovery values are higher than recovery values that are obtained for example with spunbonded web made of Sheath/ Core bi-component filaments (LLDPE /TPU) as the ones described in examples No 10 of US patent 6,225,243.

The comparative examples n°19, 20 and 21 were based on pure TPU, same in core and in sheath arrangement. Even though elasticity was good, the elastic layer could not be used, because of the sticky feel and touch. Furthermore, the elastic web was not thermo-bondable to other polypropylene-based layers, because of the degradation of the TPU during melting. Compared to examples 19 to 21 (TPU/TPU), the spunbonded web of the invention (examples No 1 to 18) is advantageously less sticky, and thus easier for example be to wound and unwound. The layer of example N°1 to N°18 has also a soft touch, which is important for all applications where the layer is in contact with the skin, such as for example hygienic/diaper applications. Furthermore, the chemical composition of the sheath being similar to polyolefin materials that are mostly used in the field of nonwoven, the thermal bondability of the spunbonded web W of the invention with other polyolefin-based nonwoven layers (L1, L2) is improved.

The comparative examples N° 22 and N°23 were based on pure VM2125 or VM 2120. The layers are thermal-bondable with pure polypropylene layers, but the elastic recovery is lower than the TPU/VM of the invention. Further, these pure VM layers require mechanical activation. Compared to examples N°22 and N°23 (VM/VM), the spunbonded web of the invention (examples No 1 to 18) has advantageously a higher elasticity and elastic recovery. The spunbonded web of the invention can be also advantageously thermal bonded with other polypropylene-based layers.

Additionally, it has to be outlined that advantageously, and in contrast with other solutions of the prior art as the ones described, for example, n US patent application No 2005/0215964, the spunbonded nonwoven web W of the invention does not require any activation step for obtaining its elastic properties, when the web W is thermal bonded to two outer layers of the family of carded PP (low grammage: below 16 gsm, low degree of bonding area) and when the bonding area is, for example, below 10%.

Examples- Composite nonwoven (L1/W/L2)

Different composite nonwoven webs (L1/W/L2) made from bi-component filaments having a sheath/core arrangement have been produced in a pilot plant scale, reproducing the process of the present invention, as described above in reference to Fig. 2.

Elastic properties of the resulting composite nonwoven of the invention were measured at 23°C $\pm$ 2, using an Instron Testing apparatus equipped with Grips type line contact or similar. The grip defines the gauge for the specimen, therefore those skilled in the art know that the grip must hold the specimen to avoid slipping or damage. The above mentioned apparatus has to be set at 2.5 cm (1 inch) gauge length and a stretching rate of 25 cm (10 inches) per minute. The specimens will have the following dimensions: width 2.5 cm (1 inch) and length 7.6 cm (3 inches). The forces were measured in Newton/cm. Tensile tests, load at peak and elongation at peak and hysteresis cycles have been performed on the above mentioned specimens specifically in cross direction (CD).

The Instron Testing apparatus is equipped with a software which plots the load-elongation curve and the data are stored in the buffer memory.

CD Load@peak :
The specimen has been pulled at a stretching rate of 25 cm (10 inches) per minute till the max load has been reached. The corresponding value of the CD Load@peak expressed in N/cm is reported in tab.4.
CD Elongation@peak:
From the load-elongation curve of the same specimen used during the previous test measurement we obtain the corresponding value of the CD Elongation@peak expressed in %, reporting it in tab.4.
CD Load@150%Elongation:
From the load-elongation curve of the same specimen used during the first test measurement we obtain the corresponding value of the CD Load@150 %Elongation, expressed in N/cm, reporting it in tab.4.
CD Permanent Set after 2 Cycles@150% Elongation :
A new specimen has been pulled (1st cycle) at a stretching rate of 25 cm (10 inches) per minute till the designated 150% elongation value: the sample is then held in the stretched state for 30 seconds and allowed to fully relax at zero force for 60 seconds. A second pull is applied (2nd cycle) at a stretching rate of 25 cm (10 inches) per minute till the designated 150% elongation value, held in the stretched state for 30 seconds and then allowed to fully relax at zero force. The percent permanent set can then be measured in CD direction and expressed in %, according to the formula:

$$CD \text{ Permanent Set after 2 Cycles@150\% Elongation} = [(L_r-L_o) / (L_s-L_o)]\%,$$

wherein Ls represents the stretched length of the specimen, Lr represents the recovered length of the specimen after the 2nd cycle, Lo represents the original length of the specimen.

The results issued from these tests are summarized in Table 4.

**TABLE 4 : Composite nonwoven of the invention**

| Example N° | STRUCTURE | ELASTIC SPUNBONDED LAYER composition | | BASIS WEIGHT | (I) | (II) | (III) | (IV) |
|---|---|---|---|---|---|---|---|---|
| | | core | sheath | gsm | | | | |
| S-1 | CARDED 16-SPUN 70-CARDED 16 | TPU 1185 AM | VM 2120 | 102 | 4.8 (12.1) | 335 | 3.5 (8,9) | 28 |
| S-2 | CARDED 16-SPUN 70-CARDED 16 | TPU 1180 A | VM 2120 | 100 | 3.9 (9,8) | 321 | 3.1 (7,8) | 25 |

(continued)

| Example N° | STRUCTURE | ELASTIC SPUNBONDED LAYER composition | | BASIS WEIGHT | (I) | (II) | (III) | (IV) |
|---|---|---|---|---|---|---|---|---|
| | | core | sheath | gsm | | | | |
| S-3 | CARDED 16-SPUN 70-CARDED 16 | TPU 2180 A | VM 2120 | 101 | 4.0 (10,3) | 288 | 3.2 (8,2) | 39 |
| S-4 | CARDED 16-SPUN 70-CARDED 16 | TPU 1185 AM | VM 2125 | 102 | 3.8 (9,6) | 340 | 3.0 (7.6) | 32 |
| S-5 | CARDED 16-SPUN 70-CARDED 16 | TPU 1180 A | VM 2125 | 99 | 3.4 (8,7) | 355 | 2.7 (6,8) | 22 |
| S-6 | CARDED 16-SPUN 70-CARDED 16 | TPU 2180 A | VM 2125 | 99 | 4.0 (10,1) | 307 | 2.8 (7,2) | 38 |

(I) CD LOAD @PEAK_N/cm (N/inch)
(II) CD ELONGATION @PEAK_%
(III) CD LOAD @ 150% ELONGATION_N/cm (N/inch)
(IV) CD PERMANENT SET AFTER 2 CYCLES @150% ELONGATION (%)

Samples S-1 to S-6 (table 4) are composite nonwovens (L1/VV/L2) of the invention wherein layers L1 and L2 are polypropylene carded nonwovens having a weight of 16 g/m$^2$. The middle web W is a spunbonded web of the invention made of 30wt%Sheath - 70wt% Core filaments.

The two outer carded layers L1 and L2 with low basis weight give textile appearance and soft touch to the final composite nonwoven to the resulting nonwoven fabric. This property is particularly useful in all applications wherein the composite nonwoven has to come into contact with the skin, for example in diapers; feminine/adult care or the like.

Furthermore, since the two outer polypropylene carded layers L1 and L2 are low point bonded (bonding area of 12%), they are significantly extensible and avoid elasticity limitation of the composite nonwoven in the CD direction. The two outer polypropylene carded layers L1 and L2 also give advantageously a dimensional stabilization to the composite in the machine direction.

Comparative examples of different nonwoven that are not covered by the invention are also given in table 5.

<u>**TABLE 5 : Comparative examples**</u>

| Ex. N° | STRUCTURE | ELASTIC MIDDLE LAYER composition | | BASIS WEIGHT_ | (I) | (II) | (III) | (IV) |
|---|---|---|---|---|---|---|---|---|
| | | core | sheath | gsm | | | | |
| S-7 | Carded-spunbonded-carded | VM 2125 | VM 2120 | 82 | 3.2 (8,1) | 260 | 2.7 (6,8) | 38 |
| S-8 | Carded-melt blown-carded | PE | PE | 122 | 4.0 (10,3) | 160 | 3.9 (10) | 26 |
| S-9 | Spunbonded | TPU | PE | 80 | 5.0 (12,7) | 270 | 3.0 (7,6) | 24 |
| S-10 | Spunbonded | TPU | PE | 120 | 7.6 (19,3) | 260 | 4.1 (10,4) | 26 |
| S-11 | Spunbonded | TPU 1180 A | TPU 1180 A | 50 | 2.8 (7,1) | 290 | 1.9 (4,8) | 16 |

(continued)

| Ex. N° | STRUCTURE | ELASTIC MIDDLE LAYER composition | | BASIS WEIGHT_ gsm | (I) | (II) | (III) | (IV) |
|--------|-----------|------|--------|------|-----|------|-------|------|
| | | core | sheath | | | | | |
| S-12 | Spunbonded | TPU 1185 AM | TPU1185AM | 121 | 6.3 (16,1) | 330 | 3.0 (7,5) | 12 |

(I) CD LOAD @PEAK_N/cm (N/inch)
(II) CD ELONGATION @PEAK_%
(III) CD LOAD @ 150% ELONGATION_N/cm (N/inch)
(IV) CD PERMANENT SET AFTER 2 CYCLES @150% ELONGATION (%)

Sample S-7:
This sample has a total weight of total 82 g/m$^2$ ; the middle layer (elastic spunbonded layer) is made of filaments constituted by pure Vistamaxx, VM 2125 in core and pure VM 2120 in sheath; the two outer carded layers are thermal-bonded to the Vistamaxx layer and are respectively of 16 g/m$^2$ each; the elongation at peak and the elastic recovery are less good than the ones obtained for the samples of the invention in table 4.
Sample S-8:
This sample (taken from a composite nonwoven commercially available on the market) is based on a different structure type CMC, where C are carded layers and M is a meltblown layer, based on a elastic polyolefin ; in that case the elongation at peak is poor in comparison of the samples of table 4.
Samples S-9 and S-10:
They are samples of 80 and 120 g/m$^2$ presented at Index 2005 by BBA-Fiberweb; they are not composite nonwovens, but homogeneous spunbonded nonwovens. They are based on TPU in core and PE in sheath. The elongation at peak is less good than the samples of table 4, even though it is almost a 100% elastic material;
Samples S-11 and S-12:
These samples are monolayer spunbonded nonwovens, constituted of 100% TPU. The elastic recoveries are excellent, and elongations at peak is quite good, but in contrast with the invention such a spunbonded TPU layer can not be laminated by thermal-bonding with outer PP layers.

The composite nonwoven of the invention is not limited to the use of layers (L1, L2) of the carded type, and is not limited to the particular multilayered structure of composite (L1/W/L2) previously described. In another variant of the invention, an additional melt blown layer (MB) can be advantageously interposed between the elastic spunbonded web W of the invention and the top carded layer L2, in order to make a composite L1/W/MB/L2.
The term "meltblown layer", as used therein, means any layer essentially made of "meltblown fibers".
"Meltblown fibers" are well known in the prior art and a meltblown process for making meltblown fibers is disclosed, for example, in U.S. Pat. No. 3,849,241 to Butin. "Meltblown fibers" are generally formed by extruding a molten thermoplastic material through a plurality of fine, usually circular, die capillaries. The molten threads or filaments issued from the die capillaries are fed into converging high velocity air streams which attenuate the filaments of molten thermoplastic material and reduce their diameter. Said diameter is generally reduced in order to obtain microfibers. Meltblown fibers are thus microfibers that may be continuous or discontinuous, and are generally smaller than 10 microns in diameter. Thereafter, the meltblown fibers are carried by the high velocity air stream and are deposited onto a collecting surface (i.e. the elastic spunbonded nonwoven of the invention) to form a layer of randomly distributed meltblown fibers.
For example, an additional meltblown layer MB is advantageously used when opacity for the composite nonwoven is required. In particular, in hygienic applications, wherein composite nonwoven of higher opacity are required (e.g. for making elastic back ear for diapers or elastic side panel for training pants), a meltblown layer is preferably laid on top of the elastic spunbonded web W of the invention; for example, the weight of the meltblown layer is at least 5 gsm, preferably 8 gsm and more preferably 10 gsm. This meltblown layer gives a more uniform white colour to the composite nonwoven, and thus improves the aesthetic thereof.
The thermoplastic materials used for making the meltblown fibers will be knowingly selected by one skilled in the art, in respect of the properties required for the composite nonwoven. By way of example only, in the field of hygienic product (diapers, training pants, ..), for the meltblown layer(s) one can advantageously use a specialty elastomeric polyolefin designed for making fine denier fibers, such a as, for example, the one commercially available from ExxonMobil Chemical Co, Huston, TX under the trademark of VISTAMAXX® and grade VM 2320.

**Claims**

1. A spunbonded nonwoven web (W) comprising a plurality of multi-component filaments, each filament comprising at least a first polymeric component and a second polymeric component, **characterized in that** the first polymeric component comprises a thermoplastic polyurethane, and the second polymeric component comprises an elastic propylene-based olefin copolymer.

2. A spunbonded nonwoven- according to claim 1, wherein each multi-component filament comprises a core and an outer sheath, and wherein the core comprises the first polymeric component, and the sheath comprises the second polymeric component.

3. A spunbonded nonwoven according to claim 1 or 2, wherein the elastic propylene-based olefin copolymer is ethylene propylene copolymer.

4. A spunbonded nonwoven according to any one of claims 1 to 3, wherein the elastic propylene-based olefin copolymer comprises propylene and from 10 to 25 weight % of one or more C2 and/or C4 to C10 alpha-olefin co-monomers

5. A spunbonded nonwoven according to any one of claims 1 to 4, wherein the elastic propylene-based olefin copolymer has (a) a heat of fusion of 4 to 70 J/g, determined by Differential Scanning Calorimetry (DSC) and (b) a Melt Flow Rate of 0.1 to 2000 dg/min, most preferably greater than 5 dg/min and less than 100 dg/min. as measured by ASTM D-1238 at 230°C and 2.16 kg.

6. A spunbonded nonwoven according to any one of claims 1 to 5, wherein the elastic propylene-based olefin copolymer has a molecular weight distribution (Mw/Mn) of less than 5, preferably between 1.5 and 4, even more preferably between 1.5 and 3.

7. A spunbonded nonwoven according to any one of claims 1 to 6, wherein the elastic propylene-based olefin copolymer comprises at least 80wt% of propylene units.

8. A spunbonded nonwoven according to any one of claims 1 to 7, wherein the elastic propylene-based olefin copolymer is a metallocene-catalysed polymer.

9. A spunbonded nonwoven according to any one of claims 1 to 8, having a root mean square (RMS) average recovery of at least 85%, said RMS average recovery being calculated from the formula:

$$\text{RMS average recovery} = [1/2(R_{CD}{}^2 + R_{MD}{}^2)]^{\frac{1}{2}},$$

wherein $R_{MD}$ and $R_{CD}$ are recovery values (R) measured on a nonwoven specimen respectively in machine direction and cross direction, after 50% elongation and one pull, and calculated from the formula :

$$R = [(Ls-Lr) / (Ls-Lo)]\%,$$

wherein Ls represents the stretched length of the specimen; Lr represents the recovered length of the specimen, Lo represents the original length of the specimen.

10. A spunbonded nonwoven according to claim 9 and having a root mean square (RMS) average recovery, after 50% elongation and one pull, of at feast 90%.

11. A spunbonded nonwoven according to claim 10 and having a root mean square (RMS) average recovery, after 50% elongation and one pull, of at least 95%.

12. A spunbonded nonwoven according to any one of claims 9 to 11, and having a RMS recovery, after two successive 50% pulls, of at least 80%.

**13.** A spunbonded nonwoven according to claim 12, and having a RMS recovery, after two successive 50% pulls, of at least 90%.

**14.** A spunbonded nonwoven web according to any one of claims 1 to 13, wherein the amount of the first polymeric component is at least 50wt% of the total weight of the filament, and the amount of the second polymeric component is less than 50wt% of the total weight of the filament.

**15.** A spunbonded nonwoven web according to claim 14, wherein the amount of the second polymeric component is less than 40wt% of the total weight of the filament, and preferably equal or less than 30wt% of the total weight the filament.

**16.** A composite nonwoven comprising at least one nonwoven layer and a spunbonded web (W) according to any one of claims 1 to 15.

**17.** A composite nonwoven according to claim 16, wherein at least one nonwoven layer (L1 or L2) is a carded nonwoven layer.

**18.** A composite nonwoven according to claims 16 or 17, wherein at least one nonwoven layer (MB) is a meltblown layer.

**19.** A composite nonwoven according to any one of claims 16 to 18, wherein at least one nonwoven layer (L1, L2, MB) is constituted by a polyolefin-based nonwoven layer.

**20.** A composite nonwoven according to claim 19, wherein at least one polyolefin-based nonwoven layer (L1, L2, MB) is a polypropylene-based nonwoven layer.

**21.** A composite nonwoven according to claim 19 or 20, comprising at least two carded polyolefin-based nonwoven layers (L1 or L2) and a spunbonded web (W) according to any one of claims 1 to 15, and sandwiched between the two carded polyolefin-based nonwoven layers.

**22.** A composite nonwoven according to claim 21, and comprising a meltblown layer (MB) interposed between the spunbonded web (W) and one carded polyolefin-based nonwoven layer (L2).

**23.** A composite nonwoven according to any one of claims 19 to 22, wherein the spunbonded web (W) and each polyolefin-based nonwoven layer are thermally bonded together with a degree of bonding that is less than 20%, preferably less than 15%, and more preferably less than 10%.

**24.** A composite nonwoven according to any one of claims 19 to 23, wherein the spunbonded web (W) and each polyolefin-based nonwoven layer are thermally bonded together at a bonding temperature between 90°C and 130°C, and preferably between 100°C and 120°C.

**25.** A composite nonwoven according to any one of claims 19 to 24, and having a CD load@Peak of at least 3.1 N/cm (8 N/inch,) and more preferably of at least 3.9 N/cm (10 N/inch).

**26.** A composite nonwoven according to any one of claims 19 to 25 , and having a CD elongation@Peak of at least 280 %, and preferably of at least 320%.

**27.** A composite nonwoven according to any one of claims 19 to 26, and having a CD load@150% Elongation of at least 1.6 N/cm (4 N/inch), and more preferably of at least 2.0 N/cm (5N/inch).

**Patentansprüche**

**1.** Spinnfaservlies-Bahn (W), umfassend eine Mehrzahl von Filamenten mit mehreren Bestandteilen, wobei jedes Filament mindestens einen ersten polymeren Bestandteil und einen zweiten polymeren Bestandteil aufweist, **dadurch gekennzeichnet, dass** der erste polymere Bestandteil ein thermoplastisches Polyurethan umfasst und der zweite polymere Bestandteil ein elastisches Olefin-Copolymer auf Propylen-Basis umfasst.

**2.** Spinnfaservlies nach Anspruch 1, worin jedes Filament mit mehreren Bestandteilen einen Kern und eine äußere Ummantelung umfasst und worin der Kern den ersten polymeren Bestandteil aufweist und die Ummantelung den zweiten polymeren Bestandteil aufweist.

3. Spinnfaservlies nach Anspruch 1 oder 2, worin das elastische Olefin-Copolymer auf Propylen-Basis ein Ethylen-Propylen-Copolymer ist.

4. Spinnfaservlies nach einem der Ansprüche 1 bis 3, worin das elastische Olefin-Copolymer auf Propylen-Basis Propylen und 10 bis 25 Gew.-% eines oder mehrerer C2- und/oder C4- bis C10-alpha-Olefin-Comonomere aufweist.

5. Spinnfaservlies nach einem der Ansprüche 1 bis 4, worin das elastische Olefin-Copolymer auf Propylen-Basis (a) eine Schmelzenthalpie von 4 bis 70 J/g, bestimmt mit Hilfe von Differentialscanning-Calorimetrie (DSC), und (b) eine Schmelzfließgeschwindigkeit von 0,1 bis 2000 dg/min, am stärksten bevorzugt größer als 5 dg/min und kleiner als 100 dg/min, gemessen nach ASTM D-1238 bei 230°C und 2,16 kg, besitzt.

6. Spinnfaservlies nach einem der Ansprüche 1 bis 5, worin das elastische Olefin-Copolymer auf Propylen-Basis eine Molekulargewichtsverteilung (Mw/Mn) von weniger als 5, vorzugsweise zwischen 1,5 und 4 und noch stärker bevorzugt zwischen 1,5 und 3 aufweist.

7. Spinnfaservlies nach einem der Ansprüche 1 bis 6, worin das elastische Olefin-Copolymer auf Propylen-Basis mindestens 80 Gew.-% Propylen-Einheiten aufweist.

8. Spinnfaservlies nach einem der Ansprüche 1 bis 7, worin das elastische Olefin-Copolymer auf Propylen-Basis ein Metallocen-katalysiertes Polymer ist.

9. Spannfaservlies nach einem der Ansprüche 1 bis 8 mit einem quadratischen Mittelwert (RMS) der durchschnittlichen Rückverformung von mindestens 85%, worin dieser quadratische Mittelwert der durchschnittlichen Rückverformung nach der Formel berechnet wird:

$$\text{RMS der durchschnittlichen Rückverformung} = [1/2(R_{CD}^2 + R_{MD}^2)]^{\frac{1}{2}},$$

worin $R_{MD}$ und $R_{CD}$ Rückverformungswerte (R) bedeuten, die an einem Vlies-Probestück in Maschinen-Richtung bzw. in Querrichtung nach einer 50%igen Längenzunahme und einem (einzigen) Ziehvorgang gemessen und gemäß der Formel berechnet wurden:

$$R = [(Ls-Lr)/(Ls-Lo)]\%,$$

worin Ls die gedehnte Länge des Probestücks darstellt, Lr die Länge des Probestücks nach der Rückverformung darstellt, Lo die ursprüngliche Länge des Probestücks darstellt.

10. Spinnfaservlies nach Anspruch 9 und mit einem quadratischen Mittelwert (RMS) der durchschnittlichen Rückverformung nach einer 50%igen Längenzunahme und einem (einzigen) Ziehvorgang von mindestens 90%.

11. Spinnfaservlies nach Anspruch 10 und mit einem quadratischen Mittelwert (RMS) der durchschnittlichen Rückverformung nach einer 50%igen Längenzunahme und einem (einzigen) Ziehvorgang von mindestens 95%.

12. Spinnfaservlies nach einem der Ansprüche 9 bis 11 mit einem quadratischen Mittelwert der Rückverformung nach zwei aufeinanderfolgenden 50%igen Ziehvorgängen von mindestens 80%.

13. Spinnfaservlies nach Anspruch 12, mit einem quadratischen Mittelwert der Rückverformung nach zwei aufeinanderfolgenden 50%igen Ziehvorgängen von mindestens 90%.

14. Spinnfaservlies nach einem der Ansprüche 1 bis 13, worin die Menge des ersten polymeren Bestandteils mindestens 50 Gew.-% des Gesamtgewichts des Filaments beträgt und die Menge des zweiten polymeren Bestandteils weniger als 50 Gew.-% des Gesamtgewichts des Filaments beträgt.

**15.** Spinnfaservlies nach Anspruch 14, worin die Menge des zweiten polymeren Bestandteils weniger als 40 Gew.-% des Gesamtgewichts des Filaments beträgt und vorzugsweise gleich oder geringer als 30 Gew.-% des Gesamtgewichts des Filaments ist.

**16.** Verbundvlies, umfassend mindestens eine Vlieslage und eine Spinnfaservlies-Bahn (W) gemäß einem der Ansprüche 1 bis 15.

**17.** Verbundvlies nach Anspruch 16, worin mindestens eine Vlieslage (L1 oder L2) eine Lage aus kardiertem Garn ist.

**18.** Verbundvlies nach den Ansprüchen 16 oder 17, worin mindestens eine Vlieslage (MB) eine schmelzgeblasene Lage ist.

**19.** Verbundvlies nach einem der Ansprüche 16 bis 18, worin mindestens eine Vlieslage (L1,L2,MB) durch eine Vlieslage auf Polyolefin-Basis gebildet wird.

**20.** Verbundvlies nach Anspruch 19, worin mindestens eine Vlieslage auf Polyolefin-Basis (L1,L2,MB) eine Vlieslage auf Polypropylen-Basis ist.

**21.** Verbundvlies nach Anspruch 19 oder 20, umfassend mindestens zwei Vlieslagen auf Polyolefin-Basis aus kardiertem Garn (L1 oder L2) und ein Spinnfaservlies (W) gemäß einem der Ansprüche 1 bis 15, das als Lage zwischen den beiden Vlieslagen auf Polyolefin-Basis aus kardiertem Garn angeordnet ist.

**22.** Verbundvlies nach Anspruch 21, umfassend eine schmelzgeblasene Lage (MB), die zwischen der Spinnfaser-Bahn (W) und einer Vlieslage auf Polyolefin-Basis aus kardiertem Garn (L2) angeordnet ist.

**23.** Verbundvlies nach einem der Ansprüche 19 bis 22, worin die Spinnfaser-Bahn (W) und jede Vlieslage auf Polyolefin-Basis untereinander thermisch mit einem Bindungsgrad verbunden sind, der geringer als 20%, vorzugsweise geringer als 15% und stärker bevorzugt geringer als 10% ist.

**24.** Verbundvlies nach einem der Ansprüche 19 bis 23, worin die Spinnfaser-Bahn (W) und jede Vlieslage auf Polyolefin-Basis untereinander thermisch mit einer Bindungstemperatur zwischen 90°C und 130°C, vorzugsweise zwischen 100°C und 120°C, verbunden wurden.

**25.** Verbundvlies nach einem der Ansprüche 19 bis 24 und mit einer CD-Belastungs@Spitze von mindestens 3,1 N/cm (8 N/inch) und stärker bevorzugt von mindestens 3,9 N/cm (10 N/inch).

**26.** Verbundvlies nach einem der Ansprüche 19 bis 25 mit einer CD-Dehnungs@Spitze von mindestens 280% und vorzugsweise von mindestens 320%.

**27.** Verbundvlies nach einem der Ansprüche 19 bis 26 mit einem CD-Belastungswert@150%Längenzunahme von mindestens 1,6 N/cm (4 N/inch) und stärker bevorzugt von mindestens 2,0 N/cm (5 N/inch).

## Revendications

**1.** Une nappe de non-tissé filé-lié (W) comprenant une pluralité de filaments multi composants, chaque filament comprenant au moins un premier composant polymérique et un deuxième composant polymérique, **caractérisée en ce que** le premier composant polymérique comprend un polyuréthane thermoplastique, et le deuxième composant polymérique comprend un copolymère d'oléfine à base de propylène élastique.

**2.** Un non-tissé filé-lié selon la revendication 1, dans lequel chaque filament multi composants comprend un coeur et une gaine extérieure, et dans lequel le coeur comprend le premier composant polymérique, et la gaine extérieure comprend le deuxième composant polymérique.

**3.** Un non-tissé filé-lié selon la revendication 1 ou 2, dans lequel le copolymère d'oléfine à base de propylène élastique est un copolymère d'éthylène et de propylène.

**4.** Un non-tissé filé-lié selon l'une quelconque des revendications 1 à 3, dans lequel le copolymère d'oléfine à base de propylène élastique comprend du propylène et 10 à 25 % en poids d'un ou plusieurs co-monomères alpha-oléfines C2 et/ou C4 à C10.

5. Un non-tissé filé-lié selon l'une des revendications 1 à 4, dans lequel le copolymère d'oléfine à base de propylène élastique a (a) une énergie de fusion de 4 à 70 J/g, déterminée par la calorimétrie à compensation de puissance (DSC) et (b) une vitesse d'écoulement en fusion de 0,1 à 2000 dg/min, de préférence supérieure à 5 dg/min et inférieure à 100 dg/min, tel que mesurée par la méthode ASTM D-1238 à 230°C et 2,16kg.

6. Un non-tissé filé-lié selon l'une quelconque des revendications 1 à 5, dans lequel le copolymère d'oléfine à base de propylène élastique a une distribution de poids moléculaire (Mw/Mn) inférieure à 5, de préférence entre 1,5 et 4, idéalement entre 1,5 et 3.

7. Un non-tissé filé-lié selon l'une quelconque des revendications 1 à 6, dans lequel le copolymère d'oléfine à base de propylène élastique comprend au moins 80% en poids d'unités propylène.

8. Un non-tissé filé-lié selon l'une quelconque des revendications 1 à 7, dans lequel le copolymère d'oléfine à base de propylène élastique est un polymère métallocène-catalysé.

9. Un non-tissé filé-lié selon l'une quelconque des revendications 1 à 8, ayant une moyenne quadratique (RMS) de recouvrance d'au moins 85%, ladite moyenne quadratique (RMS) de recouvrance étant calculée à partir de la formule :

$$\text{RMS recouvrance} = [1/2(R_{CD}^2 + R_{MD}^2)]^{1/2},$$

dans laquelle $R_{MD}$ et $R_{CD}$ sont des valeurs de recouvrance (R) mesurées sur un spécimen non-tissé respectivement dans le sens machine et dans le sens traverse, après 50% d'allongement et une traction, et calculées selon la formule :

$$R = [(Ls-Lr) / (Ls-Lo)]\%,$$

dans laquelle Ls représente la longueur en extension du spécimen ; Lr représente la longueur recouvrée par le spécimen une fois relâché, Lo représente la longueur initiale du spécimen.

10. Un non-tissé filé-lié selon la revendication 9 et ayant une moyenne quadratique (RMS) de recouvrance d'au moins 90%, après 50% d'allongement et une traction.

11. Un non-tissé filé-lié selon la revendication 10 ayant une moyenne quadratique (RMS) de recouvrance d'au moins 95%, après 50% d'allongement et une traction.

12. Un non-tissé filé-lié selon l'une quelconque des revendications 9 à 11 ayant une moyenne quadratique (RMS) de recouvrance d'au moins 80%, après deux tractions successives à 50%.

13. Un non-tissé filé-lié selon la revendication 12, ayant une moyenne quadratique (RMS) de recouvrance, d'au moins 90%, après deux tractions successives à 50%.

14. Une nappe de non-tissé filé-lié selon l'une quelconque des revendications 1 à 13, dans laquelle la quantité du premier composant polymérique est d'au moins 50 % en poids du poids total du filament, et la quantité du deuxième composant polymérique est inférieure à 50% en poids du poids total du filament.

15. Une nappe de non-tissé filé-lié selon la revendication 14, dans laquelle la quantité du deuxième composant polymérique est inférieure à 40% en poids du poids total du filament, et de préférence égal ou inférieure à 30% en poids du poids total du filament.

**16.** Un non-tissé composite comprenant au moins une couche de non-tissé et une nappe filée-liée (W) selon l'une des revendications 1 à 15.

**17.** Un non-tissé composite selon la revendication 16, dans lequel au moins une couche de non-tissé (L1 ou L2) est une couche de non-tissé cardé.

**18.** Un non-tissé composite selon les revendications 16 ou 17, dans lequel au moins une couche de non-tissée (MB) est une couche réalisée par fusion-soufflage.

**19.** Un non-tissé composite selon l'une quelconque des revendications 16 à 18, dans lequel au moins une couche de non-tissé (L1, L2, MB) est constituée par une couche de non-tissé à base de polyoléfine.

**20.** Un non-tissé composite selon la revendication 19, dans lequel au moins une couche non-tissé à base de polyoléfine (L1, L2, MB) est une couche de non-tissé à base de polypropylène.

**21.** Un non-tissé composite selon la revendication 19 ou 20, comprenant au moins deux couches de non-tissé cardé à base de polyoléfine (L1 ou L2) et une nappe filée-liée (W) selon l'une des revendications 1 à 15, et intercalée entre les deux couches de non-tissé cardé à base de polyoléfine.

**22.** Un non-tissé composite selon la revendication 21, et comprenant une couche réalisé par fusion-soufflage (MB) interposée entre la nappe filée-liée (W) et une couche de non-tissé cardé à base de polyoléfine (L2).

**23.** Un non-tissé composite selon l'une quelconque des revendications 19 à 22, au dans lequel la nappe filée-liée (W) et chaque couche de non-tissé à base de polyoléfine sont thermiquement liées ensemble avec un degré de liage inférieur à 20%, de préférence inférieur à 15%, et idéalement inférieur à 10%.

**24.** Un non-tissé composite selon l'une quelconque des revendications 19 à 23, au dans lequel la nappe filée-liée (W) et chaque couche de non-tissé à base de polyoléfine sont thermiquement liées ensemble à une température de liage entre 90°C et 130°C, et de préférence entre 100°C et 120°C.

**25.** Un non-tissé composite selon l'une quelconque des revendications 19 à 24, ayant un « CD load@Peak » d'au moins 3,1 N/cm, et de préférence d'au moins 3,9N/cm.

**26.** Un non-tissé composite selon l'une des revendications 19 à 25, ayant un « CD elongation@Peak » d'au moins 280%, et de préférence d'au moins 320%.

**27.** Un non-tissé composite selon l'une quelconque des revendications 19 à 26, ayant un « CD load@150% Elongation » d'au moins 1,6 N/cm, et de préférence d'au moins 2,0 N/cm.

EP 1 889 955 B1

FIG.1

EP 1 889 955 B1

FIG.2

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6225243 B
- WO 0008243 A
- US 6225243 A
- US 3338992 A, Kenney
- US 3692613 A, Dorschner
- US 3802817 A, Matsuki
- US 4405297 A, Appel
- US 4812112 A, Balk
- US 5665300 A, Brignola
- US 20050215964 A
- US 3849241 A, Butin